# EUROPÄISCHE PATENTSCHRIFT

(11) **EP 0 453 724 B1**
(45) Veröffentlichungstag und Bekanntmachung des Hinweises auf die Patenterteilung: **26.07.1995**
(21) Anmeldenummer: 91102417.2
(22) Anmeldetag: 20.02.1991
(51) Int. Cl.: G11B 33/04

(54) **Mehrteiliger Aufnahmebehälter**
Multi-part recipient
Récipient de stockage en plusieurs pièces

(30) Priorität: 12.04.1990 DE 4011920
(43) Veröffentlichungstag der Anmeldung: 30.10.1991
(73) Patentinhaber: Kurz Kunststoffe GmbH, D-72401 Haigerloch (DE)
(72) Erfinder: Seifert, Josef, W-7451 Grosselfingen (DE); Kurz, Josef, W-7452 Haigerloch-Owingen (DE)
(74) Vertreter: Otte, Peter, Dipl.-Ing.

(56) Entgegenhaltungen:
- EP-A- 0 301 417

## Beschreibung

### Stand der Technik

Die Erfindung geht aus von einem mehrteiligen Aufnahmebehälter nach dem Oberbegriff des Anspruchs 1 (EP-A-0 301 417) und betrifft insbesondere die Möglichkeit, in einer Vielzahl zusammenhängender steifer Gefache plattenförmige Aufzeichnungsträger aufzunehmen und beim Öffnen des Aufnahmebehälters, was einem Auseinanderziehen der einzelnen Gefache entspricht, die von diesem aufgenommenen Aufzeichnungsträger gut erkennbar darzustellen.

Bei einem bekannten mehrteiligen Aufnahmebehälter der eingangs genannten Art (DE 86 02 838 U1, DE-PS 36 03 383) werden die einzelnen plattenförmigen Aufzeichnungsträger in einzelnen steifen Gefachen aufgenommen, die in geschlossenem Zustand einen Stapel bilden. Dabei sind die einzelnen Gefache, die jeweils Aufnahmetaschen bilden, mit Hilfe von Verbindungselementen erster Art so miteinander verbunden, daß diese Verbindungselemente beim Öffnungsvorgang die Gefache zusammen mit den zwischenliegenden Gefachabschnitten unter Bildung einer Parallelogrammführung auffächern, was ein scherengitterartiges Auseinanderziehen des Stapels zu parallel und auf Abstand stehenden Gefachen ermöglicht. Es sind dabei immer mindestens zwei Verbindungselemente an mindestens jeweils zwei parallel laufenden Gelenkachsen an den einander zugewandten Flächenseiten von benachbarten Gefachen angelenkt.

Auf diese Weise ergibt sich zwar eine direkte Sichtkontrolle und die Möglichkeit einer Identifizierung sämtlicher in den einzelnen Gefachen des mehrteiligen Aufnahmebehälters abgelegten Gegenstände, beispielsweise Aufzeichnungsträger oder Einzelkassetten, wobei dann beim Schließen des mehrteiligen Aufnahmebehälters eine erhebliche Reduzierung des zur Aufbewahrung erforderlichen Raums erzielt wird. Es ist aber nicht auszuschließen, daß die Herstellung eines solchen mehrteiligen Aufnahmebehälters kompliziert ist und durch die Parallelogrammführung ein lediglich scherengitterartiges Auseinanderziehen der Gefache in einer vorgegebenen Richtung möglich ist, so daß sich eine gewisse Steifheit ergibt.

Bei einem weiteren bekannten mehrteiligen Aufnahmebehälter, der der Aufnahme scheibenförmiger Aufzeichnungsträger dient (DE 32 47 796 A1), ist ein kastenförmiges Gehäuse vorgesehen, aus welchem schubladenartig ein Schieber herausgezogen werden kann. Der Schieber ist rahmenförmig ausgebildet und verschließt mit einer Stirnwand das Gehäuse vollständig, wobei an diesem Schieber plattenförmige Halter einseitig so angelenkt sind, daß bei Herausziehen des Schiebers die einzelnen Halter sich in der dann erreichten Entnahmeposition für die plattenförmigen Aufzeichnungsträger rosettenartig aufspreizen, so daß sie insgesamt fächerartig von ihren Anlenkstellen am Schieber abstehen. Hierdurch ist es zwar möglich, die Aufzeichnungsträger aus dem geöffneten Behälter jeweils einzeln zu entnehmen, die die Aufzeichnungsträger aufnehmenden Gefache oder Halter sind aber an ihrer einen Seite in Anlage zueinander gehalten, so daß auch in der Entnahmeposition nur ein geringer Teil beispielsweise von Etikettenflächen, Beschriftung u. dgl. sichtbar sein kann, da ein Lesen von der Seite her nur schwer möglich ist und bei der normalen Lese- bzw. Entnahmeposition die einzelnen Halter zwar aufgefächert sind, aber immer noch, einander überdeckend, angeordnet stehen. Darüber hinaus ist die bekannte Aufbewahrungsvorrichtung kompliziert aufgebaut und benötigt auf jeden Fall ein separates Gehäuse, da die einzelnen Gefache nur durch die Wirkung des Gehäuses in Verbindung mit dem Schieber zu einem Stapel zusammengelegt und wieder aufgefächert werden können.

Bei einem Behälter für Magnetbandkassetten ist es ferner bekannt (DE 26 09 881 A1), in dem Behälter mehrere Gefache bildende Laden so anzuordnen, daß sie einerseits herausziehbar sind, so daß der eingelegte Aufzeichnungsträger entnommen werden kann, andererseits aber gegen ein vollständiges Herausziehen so gesichert sind, daß sie sich bei weitestgehender Öffnung auf einer Vorderkante des Behälters in einer nach unten geneigten Lage abstützen, so daß zwar die einzelnen Behälter für die Aufzeichnungsträger durch Verbindungsmittel, nämlich das umfassende Gehäuse, zu einem kompakten Magazin vereinigt sind, dieses aber nicht aufgefächert werden kann.

Allgemein ist es bekannt, einen mehrteiligen, flache Gefache oder Aufnahmetaschen aufweisenden Behälter an seinem einen unteren Ende, sämtliche Gefache hierbei umfassend, zu verbinden, während er an seinem anderen Ende rosettenförmig geöffnet oder aufgeklappt werden kann, etwa wie man zusammengefaltete Lampions öffnet, wobei dann kreisbogenförmig die sich nach unten und innen verjüngenden Behältertaschen jeweils geöffnet werden und zugänglich sind. Ein solcher Behälter hat aber den Nachteil, daß im wesentlichen nur sehr dünne Gegenstände, beispielsweise Papierbögen eingeordnet werden können, während beispielsweise die Aufnahme von Schachteln ausgeschlossen ist, da diese über ihre Höhe die gleichen Dickenabmessungen aufweisen und daher ein solcher rosettenförmiger Behälter nicht mehr geschlossen werden könnte.

Es ist auch bekannt, bestimmte plattenförmige Gegenstände, beispielsweise sogenannte Disketten für Rechner oder Computer in Stapeln anzuordnen und so zu archivieren; wird jedoch zum Gebrauch eine bestimmte Diskette benötigt, dann muß bei den bisherigen Lagermöglichkeiten der ganze Stapel der verfügbaren Disketten oder sonstigen Speichermittel, die beispielsweise auch sogenannte CD-ROM-Boxen sein können, von Hand durchgesehen werden, denn nur durch Öffnen der Behälter oder jedenfalls Entfernen über diesem angeordneter weiterer Behälter ist es möglich, die Aufschriften zu lesen und dann eine entsprechende Speicherplatte auszuwählen.

Der Erfindung liegt die Aufgabe zugrunde, den mehrteiligen Aufnahmebehälter der eingangs genannten Art unter Beibehaltung der steifen, aneinander geketteten Gefache in einer vereinfachten, möglichst in einem einzigen Spritzgießvorgang produzierbaren Form herzustellen, mit wesentlich größerer Flexibilität in der Handhabung.

### Vorteile der Erfindung

Die Erfindung löst diese Aufgabe mit den Merkmalen des Anspruchs 1 und hat den Vorteil, daß durch das dritte, mittlere Filmscharnier-Gelenk bei jedem der Verbindungselemente, die die steifen Gefache miteinander einstückig verbinden, eine besonders große Flexibilität bei gleichzeitiger Vereinfachung des Aufbaus resultiert, mit der vorteilhaften Möglichkeit, daß man die einzelnen Gefache entweder nach Art einer Scherengitterform auseinanderziehen, aber auch rosettenartig so öffnen kann, daß ein unterer Teil beisammen bleibt, während sich die oberen Gefache auf größtmöglichen Abstand auseinanderfächern.

Vorteilhaft ist ferner, daß die in sich durch das dritte Gelenk abknickenden Verbindungselemente nicht nach außen über den Behälterabmessungen überstehen, sondern nach innen auf sich selbst gerichtet eingefaltet und in Nischen im Behälterrandbereich aufgenommen sind, so daß es möglich ist, die einzelnen Gefache so aufeinander zu stapeln, daß der Gesamtabstand lediglich der Summe der einzelnen Gefachhöhen oder -dicken entspricht, ohne daß die Verbindungselemente zusätzlich in der Dicke auftragen.

Weitere Verbesserungen und Ausgestaltungen der Erfindung sind Gegenstand der Unteransprüche und in diesen niedergelegt.

Wird der mehrteilige Aufnahmebehälter vollkommen einstückig durch ein einheitliches Spritzgußverfahren aus einem geeigneten Kunststoff hergestellt, dann benötigt man lediglich noch ein weiteres Verschlußelement, vorzugsweise in Form einer über die Gesamtheit der Gefache überstülpbaren Abdeckhaube, die dann gleichzeitig den mehrteiligen Aufnahmebehälter zusammenhält und dessen Inhalt sichert. Beim Abnehmen der Haube gehen die einzelnen Gefache aufgrund der sie verbindenden Filmscharniere der Verbindungselemente automatisch etwas auseinander.

### Zeichnung

Ausführungsbeispiele der Erfindung sind in der Zeichnung dargestellt und werden in der nachfolgenden Beschreibung näher erläutert. Es zeigen:
- Fig. 1: eine Ausführungsform eines mehrteiligen Aufnahmebehälters in perspektivischer Darstellung bei abgenommener Abdeckhaube;
- Fig. 2: eine Ansicht des mehrteiligen Aufnahmebehälters der Fig. 1 von vorn mit gestrichelt angedeuteter Abdeckhaube und
- Fig. 3: einen Schnitt längs der Linie III-III der Fig. 2;
- Fig. 4: eine Seitenansicht des mehrteiligen Aufnahmebehälters in einer möglichen auseinandergezogenen, aufgefächerten Form mit teilweise gestreckten Verbindungselementen und
- Fig. 5: einen Schnitt längs der Linie V-V der Fig. 4;
- Fig. 6: zeigt den mehrteiligen Aufnahmebehälter der bisherigen Figuren in einer Ansicht von oben, während die
- Fig. 7: den geradlinig auseinandergezogenen mehrteiligen Aufnahmebehälter in einer der Fig. 4 vergleichbaren Ansicht, jedoch im Schnitt zeigt, mit in die einzelnen Gefache eingesetzten, lediglich angedeuteten Informationsträgern, wobei die
- Fig. 8: einen Schnitt längs der Linie VIII-VIII der Fig. 7 zeigt; schließlich zeigt die
- Fig. 9: den erfindungsgemäßen mehrteiligen Aufnahmebehälter in einer anderen, auseinandergezogenen Form, bei der die einzelnen Gefache seitlich gekippt erscheinen, so daß sich eine bessere Lesbarkeit der Beschriftungen der in den Gefachen aufgenommenen Informationsträger ergibt.

### Beschreibung der Ausführungsbeispiele

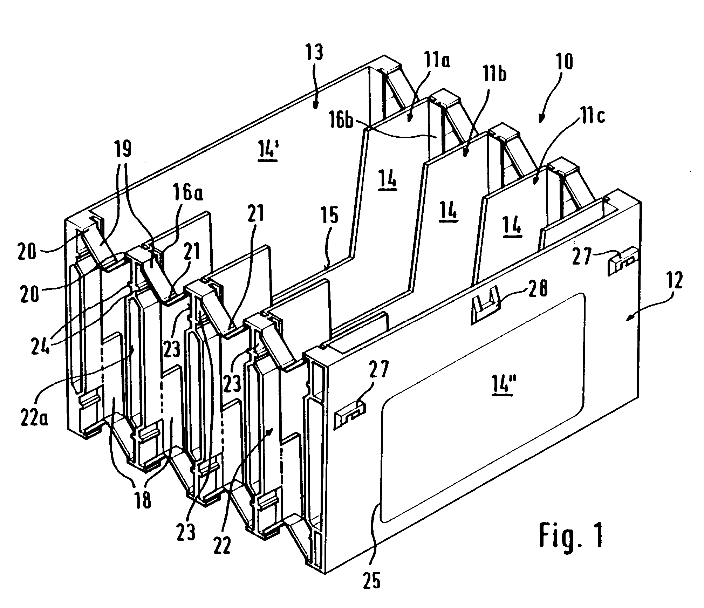

Die Grundstruktur der Erfindung läßt sich am besten anhand der perspektivischen Darstellung der Fig. 1 erläutern; der mehrteilige Aufnahmebehälter 10 vorliegender Erfindung umfaßt eine vorgegebene Anzahl innenliegender Gefache 11a, 11b, 11c sowie jeweils ein vorderes Abschlußfach 12 und ein hinteres Abschlußfach 13, wobei diese Zuordnung natürlich davon abhängt, von welcher Seite man den Behälter betrachtet, also nicht einschränkend zu verstehen ist.

Jedes der Gefache umfaßt eine ganz oder teilweise geschlossene Vorder- oder Rückwand; bei den Innengefachen 11a, 11b, 11c ... sind in der perspektivischen Betrachtungsweise der Fig. 1 Rückwände 14 jeweils vorgesehen, die, beispielsweise aus Materialersparung einen mehr oder weniger großen Ausschnitt 15 jeweils aufweisen können. Jede Rückwand geht in beidseitige Seitenwände 16a, 16b einstückig über, deren Breite so bemessen ist, daß Aufzeichnungs- oder Informationsträger vorgegebener Dicke jeweils aufgenommen werden können, beispielsweise Disketten, CD-Platten, evtl. auch jeweils mit individuellem Behälter o.dgl.

Die Anzahl der Gefache ist grundsätzlich beliebig, desgleichen die Art und Struktur des jeweils von den Gefachen aufzunehmenden plattenförmigen Gegenstands, der im folgenden überwiegend lediglich noch als Diskette bezeichnet wird.

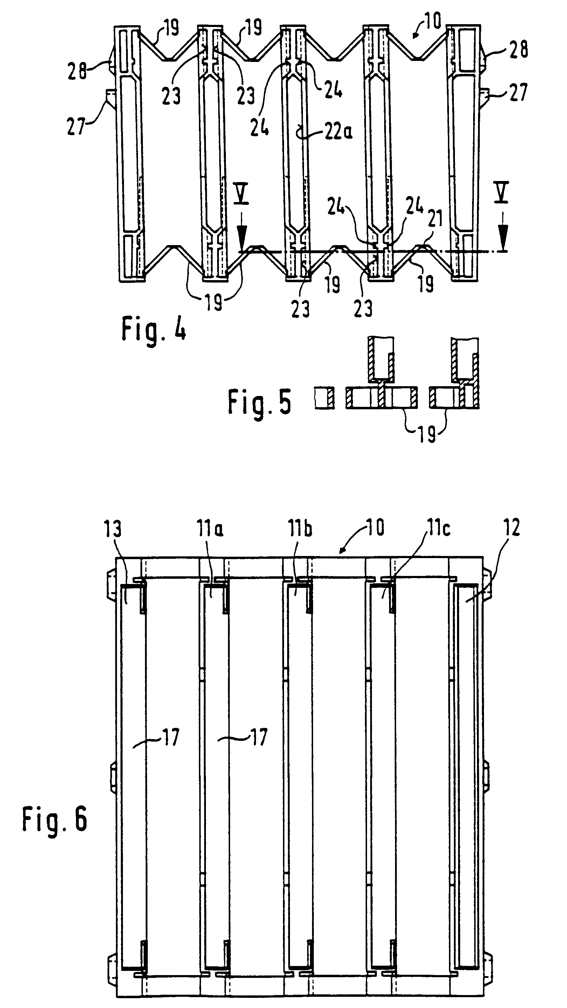

Die einzelnen Gefache sind nach oben jeweils offen, wie die Fig. 1 zeigt, weisen jedoch unten in Fortsetzung der Seitenwände 16a, 16b eine Bodenwand auf, die am besten aus der Draufsicht der Fig. 6 zu erkennen und mit 17 bezeichnet ist. Durch diese Bodenwand 17 sowie durch von den vorderen Randkanten der Seitenwände 16a, 16b nach innen vorspringende, Teile einer Vorderwand vorzugsweise nur an dieser Stelle bildende, beidseitige Teilflächen 18 vervollständigt sich der Aufnahmebereich jedes Gefachs 11a, 11b ... 12 und 13. Die nur sehr schmalen vorderen Teilflächen 18 jedes Gefachs dienen lediglich dazu, im auseinandergezogenen Zustand des mehrteiligen Behälters die von den Gefachen aufgenommenen Informationsträger oder Disketten daran zu hindern, nach vorn (immer in der Richtung der perspektivischen Darstellung der Fig.1 gesehen) herauszufallen, wobei die von dem Behälter aufgenommenen Disketten im zusammengefalteten Zustand ohnehin von der jeweils an der vorderen Kante eines der Gefache anliegenden Rückwand des davor liegenden Gefaches gehalten sind.

Es versteht sich, daß der insoweit beschriebene Aufbau eines jeden Gefachs auch einer Vielzahl von Modifikationen und Änderungen, insbesondere hinsichtlich der Ausbildung der einzelnen Vorderwandteilflächen, der Rückwände und der Seitenwände zugänglich ist, ohne daß sich hierdurch an der grundsätzlichen Konzeption der Erfindung etwas ändert.

Dabei ist es ein wesentliches Merkmal der Erfindung, daß die einzelnen Gefache 11a, 11b, 11c ..., 12, 13 jeweils über Verbindungselemente 19 miteinander verbunden sind, also einstückig aneinander hängen. Diese Verbindungselemente sind auf jeder Seite des mehrteiligen Aufnahmebehälters oben und unten vorgesehen, so daß bei dem dargestellten Ausführungsbeispiel von den Innengefachen 11a, 11b, 11c nach vorn und hinten auf jeder Seite oben und unten Verbindungselemente ausgehen, insgesamt also acht Stück, während, wie ohne weiteres einzusehen und von dem vorderen und hinteren Gefach jeweils nur insgesamt vier Verbindungselemente 19 zum angrenzenden Gefach laufen.

Bei diesen Verbindungselementen handelt es sich um eine Art Flachstäbe, die über Filmscharniere 20 jeweils an den Gefachen insofern einstückig befestigt sind und die ferner noch über ein weiteres Mittengelenk 21 verfügen, welches die hohe Flexibilität und universale Anwendbarkeit des erfindungsgemäßen mehrteiligen Aufnahmebehälters in besonderem Maße sichert.

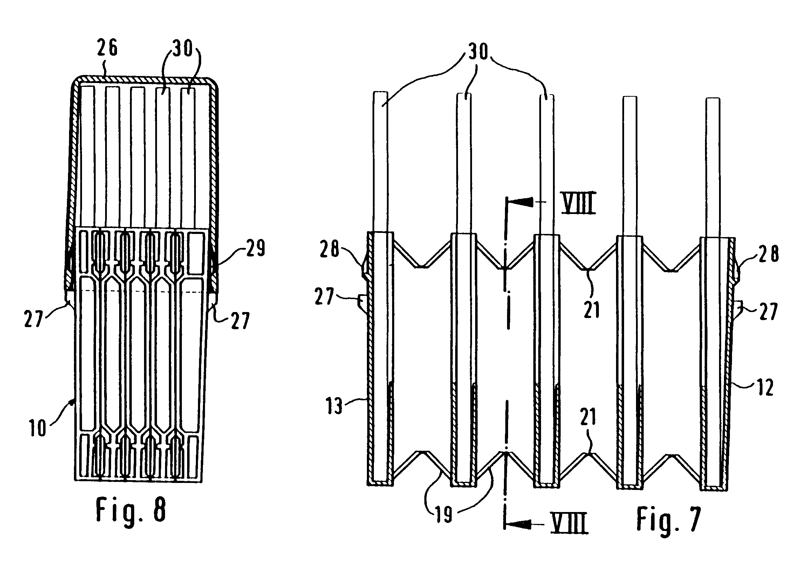

Dabei versteht es sich, daß die jeweiligen Verbindungselemente 19 beidseitig seitlich sich jeweils außerhalb des eigentlichen Gefach-Aufnahmeraums befinden, also weiter außen seitlich angesetzt sind, so daß sichergestellt ist, daß bei dem Zusammenklappen sämtlicher Gefache in die beispielsweise in Fig. 8 dargestellte Form die auf sich selbst aufgrund des Mittengelenks 21 zurückgeklappten Verbindungselemente 19 nicht in der Dicke des Gesamtbehälters zusätzlich auftragen.

Daher sind bei allen Gefachen an den seitlichen Rändern Vorsprünge 22 vorgesehen, die etwa so breit sind wie die Breite der einzelnen, jeweils dreigelenkigen Verbindungsflachstege.

Bei dem Ausführungsbeispiel sind an den seitlichen Vorsprüngen oben und unten über die schon erwähnten Filmscharniere 20 diese Verbindungsflachstege befestigt (durch einen einstückigen Spritzgießvorgang), wobei die seitlichen Vorsprünge im Bereich dieser die Verbindungselemente 19 bildenden Verbindungsflachstege beidseitig, also nach vorn und hinten Ausnehmungen 23 aufweisen, in welche sich beim Zusammenklappen die Verbindungsflachstege einlegen und insofern aufgenommen sind. Dabei klappen diese Verbindungsflachstege aufgrund des Mittengelenks 21 auf sich selbst zurück, und zwar so, daß die mittleren Filmgelenke 21, also die Mittengelenke von auf der gleichen Seite angeordneten Verbindungselementen aufeinander zu gerichtet sind, also nicht etwa nach außen über die Umrisse des mehrteiligen Aufnahmebehälters hinausragen. In den Aufnahmenischen 23 können dann noch beidseitig vorspringende Stege 24 vorgesehen sein, die die beidseitig eingeklappten Teile der Verbindungsflachstege in einer zentrierten mittleren Position halten.

Die seitlichen Vorsprünge 22 können im mittleren Bereich jeweils eine auch entsprechend groß ausgebildete Ausnehmung 22a aufweisen, beispielsweise aus Gründen einer Materialersparnis oder zur Erzielung eines gefälligen Anblicks.

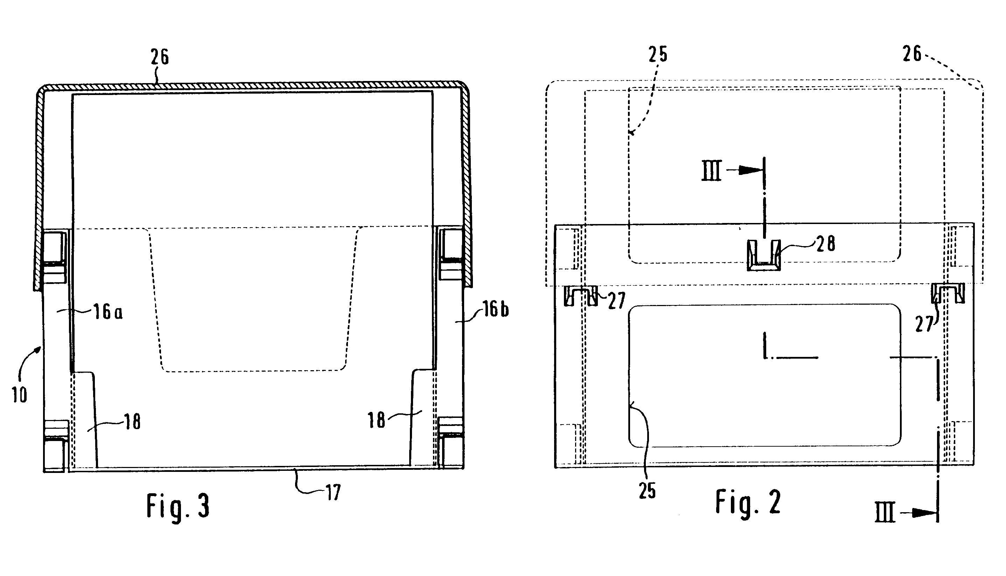

Es versteht sich, daß insbesondere zur Erzielung vorn und hinten geschlossener Wandflächen des mehrteiligen Aufnahmebehälters die Außenwände des vorderen Gefachs 12 und des hinteren Gefachs 13 unterschiedlich ausgebildet sind und damit auch diese Gefache selbst; bei dem hinteren Gefach 13 in der Darstellung der Fig.1 besteht der unterschied lediglich darin , daß die Rückwand 14′ vollflächig, also ohne die Ausnehmung 15 ausgebildet ist, während das vordere Gefach im rückwärtigen Bereich zwar so ausgebildet ist, wie jedes der Innenfächer 11a, 11b undsofort, jedoch die nur sehr geringen Vorderwand-Teilflächen 18 der Innengefache zu einer vollständigen, geschlossenen Vorderwand 14˝ ausgebildet sind, die den mehrteiligen Aufnahmebehälter von dieser Seite abschließt. Dabei handelt es sich bei den in den Figuren insgesamt mit 25 bezeichneten, auch gestrichelten Umrandungen (s. hierzu auch Fig.2) nicht um Ausnehmungen, sondern um durch den Spritzvorgang markierte Flächen, die beispielsweise der Anbringung von Etiketten, Schildchen o. dgl. dienen können.

Ein solchermaßen ausgebildeter mehrteiliger Aufnahmebehälter wird in vorteilhafter Weise noch durch eine obere Abschlußhaube 26 (siehe z. B. Figuren 3 oder 8) verschlossen die kastenförmig unten offen über die geschlossene Form der aufeinander zu geklappten Gefache mit darin angeordneten Disketten geschoben wird. Hierbei sind noch der Auflage der unteren Ränder der Abschlußhaube 26 dienende Anschläge 27 jeweils an der Vorder- und Rückwand der Außengefache 12 und 13 vorgesehen, während ein mittlerer Vorsprung 28, ebenfalls wieder an Vorder- und Rückwand der Außengefache in eine Ausnehmung 29 der Abschlußhaube eingreifen kann, so daß diese verriegelt auf dem mehrteiligen Aufnahmebehälter sitzt. Auf diese Weise wird eine so gebildete Archivierungsbox zusammengehalten und bleibt staubdicht verschlossen. Der staubdichte Verschluß wird auch deshalb gesichert, weil im geschlossenen Zustand die Außenkanten der seitlichen Vorsprünge 22 eng aneinanderliegen und dort, wo die Nischen 23 für die Aufnahme der eingeklappten Verbindungsteilflachstege gebildet sind, die Seitenwandungen 16a, 16b bis nach oben durchgezogen sind, die dann an den jeweiligen zugewandten Rückflächen anliegen. Es ergibt sich so ein insgesamt abgeschlossener, durch die einzelnen Gefach-Aufnahmeräume gebildeter Hohlraum.

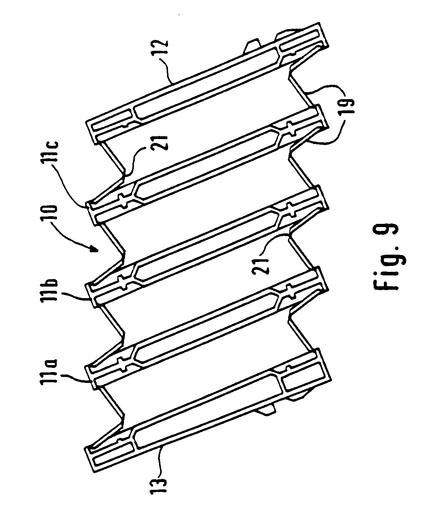

Der Darstellung der Fig. 7 läßt sich noch entnehmen, wie einzelne Aufzeichnungsträger, speziell Disketten 30 von den Gefachen aufgenommen und im auseinandergezogenen Zustand der Gefache deutlich erkennbar zur visuellen Inspektion dargestellt werden; dabei zeigt Fig. 9, daß durch die spezielle Gelenkausbildung der einzelnen Verbindungselemente im auseinandergezogenen Zustand im Grunde beliebige Konfigurationen des Aufnahmebehälters möglich sind, insbesondere auch solche, bei denen die einzelnen Gefache schräg liegend so aufgefächert auseinandergezogen sind, daß Beschriftungen oder Label auf den Disketten gut wahrgenommen werden können.

Wegen der universellen Flexibilität der dreigelenkigen Verbindungselemente ist es natürlich auch möglich, einen solchen Aufnahmebehälter rosettenartig zu öffnen, beispielsweise also im unteren Bereich völlig zusammenzuhalten und nach oben etwa wie einen Papierlampion zu öffnen.

Die Einfaltung der einzelnen Verbindungselemente 19 über ihr Mittengelenk 21 läßt sich besonders gut erkennbar noch der Darstellung der Fig. 4 in Verbindung mit der Schnittdarstellung der Fig. 5 entnehmen; Fig. 4 zeigt die jeweils nach innen vom Anlenkbereich des jeweiligen Filmscharniers laufenden Aufnahmenischen für den einzelnen Verbindungsteilsteg und die Anschlagbildung für die Teilstege durch die beidseitigen Vorsprünge 24 innerhalb der Nischen.

## Patentansprüche

1. Mehrteiliger Aufnahmebehälter für mehrere plattenförmige Aufzeichnungsträger, wie z.B. Disketten, CD-Platten evtl. auch jeweils mit individuellem Behälter, bei dem die Aufzeichnungsträger innerhalb eines Schutzgehäuses von einzelnen steifen Gefachen aufgenommen werden, die bei geschlossenem Aufnahmebehälter einen Plattenstapel bilden und beim Öffnungsvorgang über die gelenkig mit Hilfe von Verbindungselementen miteinander verbundenen Gefache diese auffächern, wobei auf jeder Seite jedes Gefachs mindestens zwei Verbindungselemente im Abstand zueinander schwenkbar so angelenkt sind, daß ein Auseinanderziehen des Gefachstapels zu auf Abstand stehenden Gefachen möglich ist und die Verbindungselemente (19) einstückig mit den Gefachen (11a, 11b, 11c; 12; 13) über Filmscharniere (20) verbunden sind, dadurch gekennzeichnet, daß die Verbindungselemente (19) jeweils etwa mittig ein weiteres Gelenk (21) aufweisen, durch welches sie im geschlossenen Zustand des Aufnahmebehälters (10) auf sich selbst zurückgeklappt sind.

2. Mehrteiliger Aufnahmebehälter nach Anspruch 1, dadurch gekennzeichnet, daß die Verbindungselemente als Verbindungs-Flachstege ausgebildet sind und die ihre Anlenkpunkte an den Gefachen bildenden Filmscharniere jeweils an der oberen bzw. unteren Randkante jedes Gefachs gebildet sind derart, daß die die Verbindungs-Flachstege in zwei gleiche Hälften teilende Mittengelenke (21) auf jeder Behälterseite in dessen geschlossenem Zustand aufeinander zu gerichtet sind.

3. Mehrteiliger Aufnahmebehälter nach Anspruch 1, dadurch gekennzeichnet, daß die Anlenkpunkte für die Filmscharnier-Gelenke der Verbindungselemente (Verbindungsflachstege) auf jeder Seite in unterschiedlicher Höhe, jedoch in einem solchen Abstand zueinander angebracht sind, daß die Verbindungsflachstege beim Einklappen über das Mittengelenk (21) innerhalb der Umrisse des Aufnahmebehälters verbleiben.

4. Mehrteiliger Aufnahmebehälter nach einem der Ansprüche 1-3, dadurch gekennzeichnet, daß sich die Verbindungselemente seitlich außerhalb des Aufnahmebereichs jedes Gefachs für einen Aufzeichnungsträger (Diskette) befinden.

5. Mehrteiliger Aufnahmebehälter nach Anspruch 4, dadurch gekennzeichnet, daß an jedem Gefach seitliche Vorsprünge (22) vorgesehen sind, von denen jeweils oben und unten die Verbindungselemente ausgehen und wobei die Vorsprünge Aufnahmenischen (23) bildende Ausnehmungen aufweisen, die der Aufnahme der jeweils zugeordneten Verbindungsflachstege in eingeklapptem Zustand dienen.

6. Mehrteiliger Aufnahmebehälter nach einem der Ansprüche 1-5, dadurch gekennzeichnet, daß Innengefache (11a, 11b, 11c) und gleichzeitig die Vorder- und Rückwand des Aufnahmebehälters bildende Außengefache (12, 13) vorgesehen sind, wobei die Innengefache (11a, 11b, 11c) mindestens eine Teilrückwand (14), Seitenwände (16a, 16b) und an diesen im Abstand zur Rückwand (14) angesetzte minimale Vorderwand-Teilflächen (18) aufweisen, während die vorderen und hinteren Gefache (12, 13) nach außen jeweils eine vollständige, ununterbrochene Wandfläche (14′, 14˝) bilden.

7. Mehrteiliger Aufnahmebehälter nach Anspruch 6, dadurch gekennzeichnet, daß bei dem vorderen Gefach (12) die Vorderwand-Teilflächen (18) eine vollständig durchgehende Abschlußwand (14˝) bilden.

8. Mehrteiliger Aufnahmebehälter nach einem oder mehreren der Ansprüche 1-7, dadurch gekennzeichnet, daß mindestens an einer der Außenwände (14′, 14˝) Anschläge (27) für eine sämtliche Gefache im geschlossenen Zustand aufnehmende und im oberen Bereich abdeckende, nach unten offene Abdeckhaube (26) vorgesehen sind.

9. Mehrteiliger Aufnahmebehälter nach einem oder mehreren der Ansprüche 1-8, dadurch gekennzeichnet, daß die Seitenwände (16a, 16b) in Verbindung mit den seitlichen Vorsprüngen (22) jedes Gefaches und in Abstimmung auf die jeweils zugewandte Rückwand so ausgebildet sind, daß der Aufnahmebehälter im geschlossenen Zustand einen im wesentlichen dichten, durch die einzelnen Gefache unterteilten Hohlraum bildet, der durch die Abdeckhaube (25) auch nach oben abgeschlossen ist.

10. Mehrteiliger Aufnahmebehälter nach einem der Ansprüche 1-9, dadurch gekennzeichnet, daß zur Verrastung mit inneren Ausnehmungen der Abdeckhaube (26) an Vorder- und Rückwand (14′, 14˝) Rastnasen (28) vorgesehen sind.

## Claims

1. A multi-part recipient for a plurality of plate-like recording media, such as e.g. diskettes, CD disks, possibly each having an individual case, wherein the recording media are received within a protective housing of individual rigid compartments which form a plate stack when the recipient is closed; and upon opening the recording media fan out via compartments which are connected to one another in an articulated manner with the aid of connecting elements, on each side of each compartment at least two connecting elements being pivotably articulated at a distance from one another in such a manner that the compartment stack can be drawn apart to form compartments at a distance from one another and the connecting elements (19) being integrally connected to the compartments (11a, 11b, 11c; 12; 13) via film hinges (20), characterised in that in each case the connecting elements (19) have another joint (21) substantially in their centre by means of which in the closed state of the recipient (10) they are folded back onto themselves.

2. A multi-part recipient in accordance with Claim 1, characterised in that the connecting elements are in the form of connecting flat fillets and the film hinges forming their articulation points to the compartments are in each case formed on the upper or lower edge as the case may be of each compartment in such a manner that the central joints (21) dividing the connecting flat fillets into two equal halves are for each recipient side directed towards one another when the latter is in the closed state.

3. A multi-part recipient in accordance with Claim 1, characterised in that the articulation points for the film hinge joints of the connecting elements (connecting flat fillets) are on each side provided at a different height but at such a distance from one another that the connecting flat fillets remain within the contours of the recipient when folded in via the central joint (21).

4. A multi-part recipient in accordance with any one of Claims 1 - 3, characterised in that the connecting elements are located laterally exterior to the receiving region of each compartment for a recording medium (diskette).

5. A multi-part recipient in accordance with Claim 4, characterised in that on each compartment there are provided lateral projections (22) from which in each case the connecting elements issue at the top and at the bottom, and the projections having recesses which form receiving niches (23) and serve to receive the associated connecting flat fillets in the folded-in state.

6. A multi-part recipient in accordance with any one of Claims 1 - 5, characterised in that there are provided inner compartments (11a, 11b, 11c) and at the same time outer compartments (12, 13) forming the front wall and rear wall of the recipient, the inner compartments (11a, 11b, 11c) having at least one partial rear wall (14), lateral walls (16a, 16b) and minimal front wall partial surfaces (18) which are attached to the latter at a distance from the rear wall (14), while the front and rear compartments (12, 13) in each case form to the exterior a complete, uninterrupted wall surface (14′, 14˝).

7. A multi-part recipient in accordance with Claim 6, characterised in that in the case of the front compartment (12), the front wall partial surfaces (18) form a totally continuous end wall (14˝).

8. A multi-part recipient in accordance with one or a plurality of Claims 1 - 7, characterised in that on at least one of the outer walls (14, 14˝) there are provided stops (27) for a covering hood (26) which is open downwards and when the recipient is in the closed state receives all compartments and covers them in the upper region.

9. A multi-part recipient in accordance with one or a plurality of Claims 1 - 8, characterised in that the lateral walls (16a, 16b) in conjunction with the lateral projections (22) of each compartment and in accordance with the relevant facing rear wall are constructed in such a manner that in the closed state the recipient forms a substantially impervious hollow space which is divided by the individual compartments and is by means of the covering hood (25) [sic] also closed in the upwards direction.

10. A multi-part recipient in accordance with any one of Claims 1 - 9, characterised in that locking noses (28) are provided on the front wall and rear wall (14, 14˝) to lock with inner recesses of the covering hood (26).

## Revendications

1. Récipient en plusieurs parties servant à stocker plusieurs supports d'enregistrement, tels que des disquettes, des disques CD, essentiellement eux-mêmes logés dans des boîtiers individuels, dans lequel :
- les supports d'enregistrement sont logés dans un boîtier de protection constitué de cases individuelles ;
- les cases, lorsque le récipient est fermé, constituent une pile, le mouvement d'ouverture ayant pour effet d'ouvrir ces cases en éventail, du fait qu'elles sont articulées entre elles par des éléments de liaison ;
- sur chaque côté d'une case sont montés, avec un certain intervalle entre eux, au moins deux éléments de liaison articulés de manière qu'en pivotant, ils permettent d'étirer la pile pour la transformer en une série de cases espacées, les éléments de liaison (19), monobloc avec les cases (11a, 11b, 11c, 12), sont reliés à celles-ci par des charnières pelliculaires (20),
récipient caractérisé en ce que chaque élément de liaison (19) comporte, à peu près en son milieu, une autre articulation (21) permettant, lorsque le récipient (10) est fermé, de rabattre les éléments de liaison sur eux-mêmes.

2. Récipient selon la revendication 1, caractérisé en ce que les éléments de liaison sont des barrettes plates dont les points d'articulation sur les cases, à savoir les charnières pelliculaires sont placées le long des bords supérieur et inférieur de chaque case, de sorte que les articulations médianes (21), séparant en deux moitiés égales les barrettes de liaison, sont ajustées sur chaque côté du récipient, lorsque celui-ci est fermé.

3. Récipient selon la revendication 1, caractérisé en ce que les points d'articulation des charnières pelliculaires des éléments de liaison (barrettes de liaison) sont de chaque côté placés à des hauteurs différentes, mais en étant espacés entre eux de sorte que les barrettes, par rabattement autour de l'articulation médiane (21) restent à l'intérieur du contour du récipient.

4. Récipient selon l'une des revendications 1 à 3, caractérisé en ce que les éléments de liaison se trouvent latéralement à l'extérieur du volume, dans lequel la case loge un support d'enregistrement (disquette).

5. Récipient selon la revendication 4, caractérisé en ce que chaque case porte des saillies latérales (22) d'où partent, vers le haut et vers le bas, les éléments de liaison, les saillies présentant des évidements constituant des niches (23) servant de logements aux barrettes de liaison correspondantes, lorsque celles-ci sont rabattues.

6. Récipient selon l'une des revendications 1 à 5, caractérisé en ce qu'il comporte des cases internes (11a, 11b, 11c) et également les cases externes (12, 13) constituant la paroi avant et la paroi arrière du récipient, les cases internes (11c, 11b, 11c) comportant au moins une partie de la paroi arrière, des parois latérales (16a, 16b) et, raccordées à celles-ci a une certaine distance de la paroi arrière (14), des surfaces partielles minimales (18) de la paroi avant, tandis que les cases (12, 13) avant et arrière constituent chacune, vers l'extérieur, une paroi complète, interrompue (14′, 14˝).

7. Récipient selon la revendication 6, caractérisé en ce que sur la case avant (12) les parties (18) de la paroi avant forment une paroi de fermeture (14˝) parfaitement continue.

8. Récipient selon une ou plusieurs des revendications 1 à 7, caractérisé en ce qu'au moins une des parois externes (14′, 14˝) porte des butées (27) destinées à un capot (26) ouvert vers le bas et recouvrant par le haut, en position de fermeture l'ensemble des cases.

9. Récipient selon une ou plusieurs des revendications 1 à 8, caractérisé en ce que les parois latérales (16a, 16b) sont reliées aux saillies latérales (22) de chacune des cases et accordées avec la paroi arrière en regard de manière que le récipient, en position de fermeture, constitue un volume creux sensiblement étanche, divisé en cases individuelles et fermé également vers le haut par le capot de couverture (25).

10. Récipient selon l'une des revendications 1 à 9, caractérisé en ce que les parois avant (14′) et arrière (14˝) portent des becs d'arrêt (28) venant se bloquer dans des cavités internes du capot de couverture (26).
